# EUROPÄISCHE PATENTSCHRIFT

(11) **EP 0 405 067 B1**
(45) Veröffentlichungstag und Bekanntmachung des Hinweises auf die Patenterteilung: **04.01.1995**
(21) Anmeldenummer: 90106351.1
(22) Anmeldetag: 03.04.1990
(51) Int. Cl.: B09B 3/00, A62D 3/00

(54) **Einrichtung zur Entfernung flüchtiger Schadstoffe aus Erdböden und vergleichbaren Materialien**
Device for removing volatile contaminants from soil or similar
Dispositif pour éliminer des contaminants volatils du sol ou analogue

(30) Priorität: 30.06.1989 DE 3921591
(43) Veröffentlichungstag der Anmeldung: 02.01.1991
(73) Patentinhaber: LEONHARD WEISS GmbH & Co. NIEDERLASSUNG CRAILSHEIM, D-74564 Crailsheim (DE)
(72) Erfinder: Schmidt, Fritz J., D-7320 Göppingen (DE); Schmidt, Werner, D-7180 Crailsheim (DE); Rapp, Walter Dr., D-7320 Göppingen (DE); Neumayr, Volker, Dr., D-7180 Crailsheim (DE); Petersen, Volker, D-7180 Crailsheim (DE)
(74) Vertreter: Pfusch, Volker, Dipl.-Ing.

(56) Entgegenhaltungen:
- EP-A- 0 245 655
- DE-A- 3 601 490
- DE-A- 3 905 133
- NL-A- 8 701 963

## Beschreibung

Die Erfindung betrifft eine Einrichtung zur Entfernung flüchtiger Schadstoffe aus Erdböden und vergleichbaren Materialien nach dem Oberbegriff des Patentanspruchs 1.

Eine solche Einrichtung ist beschrieben in der nicht vor-veröffentlichten älteren Anmeldung DE-A-39 05 133 (veröffentlicht am 30.11.89).

Bei jener Einrichtung wird das zu reinigende Material kontinuierlich durch eine Gasbehandlungskammer geführt. Das Behandlungsgas wird durch die Kammerwand hindurch ein- und abgeführt. Ein wirtschaftlicher Einsatz einer solchen Behandlungseinrichtung ist nur bei einer kurzen Verweilzeit des Gases in der Behandlungskammer möglich. Voraussetzung für eine kurze Behandlungszeit ist jedoch eine relativ hohe Gastemperatur, mit der wiederum hohe Energieverluste verbunden sind.

Hier eine Einrichtung zu schaffen, bei der die Reinigung mit einem geringeren Energieverlust durchführbar ist, ist das Problem, mit dem sich die vorliegende Erfindung beschäftigt.

Jeweils auf dem gleichen Lösungsprinzip beruhende Lösungsvarianten dieses Problems sind Gegenstand der unabhängigen Ansprüche 1, 12 und 14.

Zweckmäßige Ausgestaltungen dieser Lösungen zeigen die jeweils zugehörigen abhängigen Unteransprüche auf.

Das gemeinsame Prinzip der drei voneinander unabhängigen Lösungsvarianten besteht darin, daß die betreffenden Einrichtungen jeweils eine sehr gute und wirksame Gasbeaufschlagung des zu reinigenden Materials durch eine in das jeweilige Innere des zu reinigenden Materials hineinführende Begasung ermöglichen.

Hiervon ausgehend kann bei der nach Anspruch 1 für eine diskontinuierliche Behandlung einzusetzenden Einrichtung mit relativ niedriger Gastemperatur gearbeitet werden. Da für die Aufbereitung größerer Erdbereichsmengen jeweils eine Vielzahl solcher erfindungsgemäßer Einrichtungen pararallel zueinander einsetzbar ist, ist diese Behandlungsform auch bei einer relativ langen Verweilzeit in den jeweiligen geschlossenen Behandlungskammern wirtschaftlich praktikabel.

Der besondere Vorteil dieser Behandlungseinrichtung liegt in der Verwendung einer äußerst niedrigen und damit nur geringste Energieverluste bedingenden Gastemperatur.

Bei den Einrichtungen nach den Ansprüchen 12 und 14 für einen kontinuierlichen Durchsatz kontaminierten Materials müssen die Gastemperaturen für einen wirtschaftlichen Einsatz in der Regel höher als bei einem diskontinuierlichen Betrieb sein. Wegen der mit den vorgenannten erfindungsgemäßen Einrichtungen erzielbaren guten Durchdringung des aufzubereitenden Materials mit Behandlungsgas kann auch hier noch mit gegenüber dem vorbekannten Stand der Technik erheblich geringeren Gastemperaturen gearbeitet werden, ohne dadurch ein schlechteres Reinigungsergebnis zu erzielen.

Soweit aus NL-A-87 01 963 eine hohle Bohrlanze mit perforierter Außenwand bekannt ist, durch die Behandlungsgas in ein zu dekontaminierendes Erdreich geführt wird, ist diese nicht mit dem erfindungsgemäßen Schneckenförderer mit poröser Schnecke zu vergleichen. Denn jene Entgegenhaltung offenbart lediglich eine direkt in ein Erdreich einzuführende Bohrlanze mit Schneckengewinde und keinen Schneckenförderer, bei dem aufbereitetes Erdreich durch einen geschlossenen begasten Trommelbehälter geführt wird. Im Gegensatz zu der vorbekannten Bohrlanze, bei der das Einführen von Gas durch die Lanze hindurch zwingend notwendig und daher auch seit langem bekannt ist, ist bei Einsatz von Schneckenförderern zur Materialdekontaminierung das hierfür benötigte Behandlungsgas bisher ausschließlich nur durch Wände des die Schnecke einschließenden Behälters hindurch ein- und abgeführt worden.

Bei den erfindungsgemäßen Einrichtungen werden der kontaminierte Erdboden und vergleichbare Materialien nicht in situ behandelt, sondern zur Aufbereitung ausgehoben. Dadurch ist ein mechanischer Aufschluß im Hinblick auf eine wirksame Oberflächenvergrößerung möglich, der insbesondere für tonige/bindige Materialien von großer Wichtigkeit ist. Das belastete Material wird mit quasi inerten Gasen, wie insbesondere Luft, durchströmt, wobei die flüchtigen Schadstoffbestandteile von den Oberflächen der Stoffpartikel desorbiert und aus feuchten Stoffanteilen gestript werden. Auf diese Weise lassen sich die Behandlungszeiten ganz erheblich verringern und zwar in beonders günstigen Fällen beispielsweise auf bis zu zwei Wochen. Selbst bei sehr ungünstigen Voraussetzungen, wie sehr hoher Schadstoffbelegung in stark tonmineralhaltigen Materialien ist im Regelfalle mit einer Behandlungszeit kaum über 3 Monaten zu rechnen.

Insbesondere durch die Behandlung des Materials in Einrichtungen nach den Ansprüchen 1 bis 11 ist es möglich, Belüftungsleitungen über das gesamte Innere des aufzubereitenden Materials zu verteilen. Die Behandlung in einem zur Atmosphäre abgeschlossenen Raum bietet zusätzlich weitere Vorteile. Einer davon besteht darin, daß das Behandlungsgas im Kreislauf unter Einschalten eines Reinigungsprozesses geführt werden kann, wodurch Schadstoffemissionen in die Atmosphäre ganz vermieden werden. Durch die Kreislaufführung des Gases kann dieses auch mit vertretbarem wirtschaftlichen Aufwand erwärmt werden, wodurch der von dem Gas ausgehende Stripeffekt innerhalb des Bodenmaterials erheblich gesteigert werden kann. Eine Aktivkohleanlage zur Gasreinigung kann als Doppelbett-Filteranlage so ausgebildet sein, daß eine selbsttätige Desorption der schadstoffbelegten Aktivkohle möglich ist. Bei einer regenerierbaren Gasreinigungsanlage müssen nur noch die aus dem Gas abgetrennten Schadstoffe entsorgt werden.

Besonders zweckmäßig und wirtschaftlich einsetzbar ist die Ausgestaltung des geschlossenen Raumes als transportabler Behälter oder Behälterkombination nach Anspruch 2.

Es kann auch ein ehemaliger, aufgelassener Eisenbahntunnel, sofern er gasdicht ist, die Funktion des geschlossenen Raumes übernehmen.

Die weiteren Ansprüche 3 bis 11 beinhalten im wesentlichen auf die Containerbauweise besonders abgestimmte Ausgestaltungen der die kontaminierten Materialien zur Belüftung aufnehmenden Einzelbehälter in bezug auf deren Gasanschlüsse sowie deren Lagerung innerhalb des Containers mit den damit verbundenen Beschickungs- und Entleerungsmöglichkeiten. Weitere Einzelheiten hierzu werden im Zusammenhang mit der Beschreibung von Ausführungsbeispielen noch näher erläutert werden.

Der unabhängige Anspruch 12 beschreibt eine erste alternative Ausführungsform des erforderlichen geschlossenen Raumes. Danach wird das ausgehobene Material in einer Art Schneckenförderer mit dem Reinigungsgas belüftet, das in das Innere der Schnecke eingeleitet und durch deren mit dem aufzubereitenden Material in Berührung stehenden Oberfläche hindurch in das aufzuarbeitende Material einströmt, Der Vorteil dieser Ausführungsform besteht in der aufgrund der ständigen Durchmischung des Bodenmaterials hervorragenden Belüftung, die besonders kurze Behandlungszeiten ermöglicht, Während die Behandlung der in Behältern in einem geschlossenen Raum ruhenden Bodenmaterialien chargenweise in Wochen- bis zu Monatsperioden erfolgen muß, kann die Behandlung bei dieser Schneckenförderer-Lösung kontinuierlich erfolgen. Dazu kann es allerdings erforderlich sein, mehrere Schneckenförderer parallel oder nach Anspruch 13 hintereinander zu schalten. Durch Erwärmen bzw. Aufheizen des Reinigungsgases kann die Desorptionsrate erheblich gesteigert werden. Darüber hinaus führt das Durchströmen des aufgeheizten Gases zu einer allmählichen Austrocknung der feuchten Materialien. Unter solchen trokkenen Bedingungen werden die Desorptionsneigungen noch einmal wesentlich erhöht.

Bei einer weiteren kontinuierlich betreibbaren Einrichtung nach den Ansprüchen 14 und 15 wird das kontaminierte Material auf ein in einem geschlossenen Behälter befindliches Endlos-Filterband aufgegeben, das porös ist. Um den Behälter zur Atmosphäre hin abzuschließen, erfolgen Eintritt und Austritt des Materials über Zellenradschleusen. Auf dem Filterband wird das zu behandelnde Material durch die Apparatur transportiert und gleichzeitig durch das durch das Material gesaugte Behandlungsgas von den flüchtigen Kontaminanten gereinigt. Das zur Behandlung erforderliche inerte Gas wird wiederum über eine Adsorptions-/Desorptions-Anlage im Kreis geführt und dabei zweckmäßigerweise vor Passieren des Materials auf eine höhere Temperatur gebracht und danach, um die Wirkkapazität der Aktivkohle nicht zu vermindern, unter den Taupunkt des mitgeförderten Wassers gekühlt. Das Wasser wird gesammelt und separat entsorgt. Zur Abreinigung des Filterbandes kann dieses mit dem inerten Gas oder mit Wasser gegengespült werden.

Weitere Möglichkeiten zur Entfernung flüchtiger Schadstoffe aus Erdböden oder vergleichbaren Materialien in Verbindung mit einer Aktivkohle-Gasreinigungsanlage sind Apparaturen in der Art von Etagenöfen oder Tellertrocknern.

Bei den kontinuierlich betriebenen Anlagen kann eine Energiezuführung auch durch Bestrahlen mit infraroten oder anderen hochfrequenten Strahlen im Bereich der Wellenlängen 1 mm - 1 m erfolgen.

Bei allen Behandlungseinrichtungen ist es für den Fall, daß mit erwärmtem Reinigungsgas gearbeitet wird, zur Energieeinsparung günstig, die mit der Atmosphäre in Verbindung stehenden Einrichtungsteile gegen Wärmeverlust zu isolieren.

Ausfühungsbeispiele sind in der Zeichnung dargestellt.

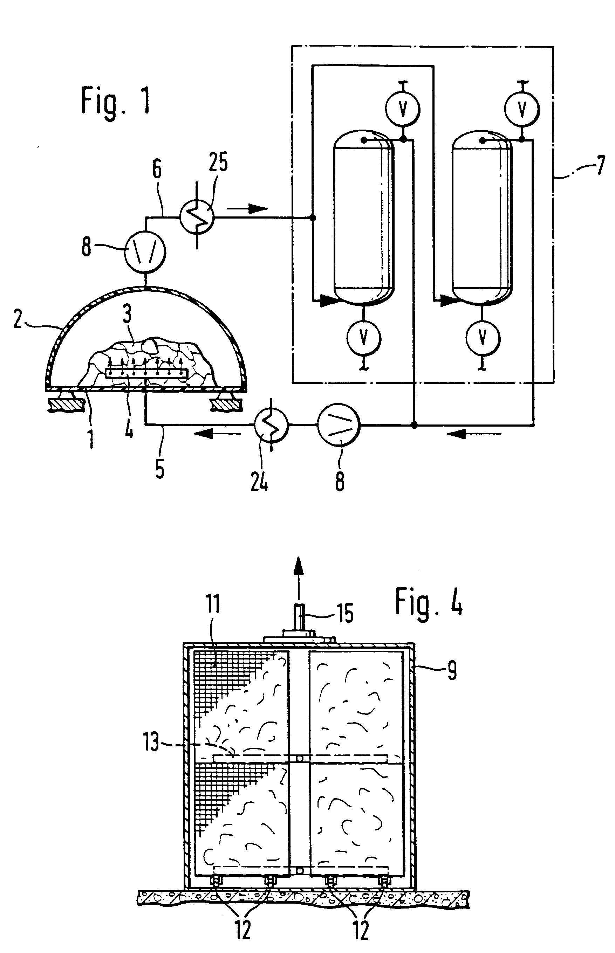

Es zeigen:
- Fig.1: eine schematische Darstellung einer Belüftungs-Bodenreinigungseinrichtung mit geschlossenem Behandlungsraum,
- Fig.2: eine Draufsicht auf eine Belüftungseinrichtung mit einem transportablen Container als geschlossenem Raum,
- Fig.3: einen Schnitt durch den Container nach Linie III-III,
- Fig.4: einen Schnitt durch den Container nach Linie IV-IV,
- Fig.5: eine schematische Darstellung einer Behandlungseinrichtung mit Schneckenförderern als geschlossenem Raum,
- Fig.5.1: eine vergrößerte Detaildarstellung eines Ausschnitts V.1 der Schnecke eines Schneckenförde rers,
- Fig.6: eine schematische Darstellung einer Behandlungseinrichtung mit einem geschlossenen Bandfilter
Bei der schematischen Darstellung des in den erfindungsgemäßen weiter unten beschriebenen Spezialeinrichtungen durchführbaren Reinigungs-Verfahrens nach Fig. 1 ist der geschlossene Raum der Einfachheit halber von einer auf einer Bodenplatte 1 dicht aufgesetzten Glocke 2 gebildet. Der ausgehobene von flüchtigen Schadstoffen zu reinigende Erdboden ist innerhalb der Glocke 2 als Haufwerk 3 auf der Bodenplatte 1 aufgeschichtet. Innerhalb des Haufwerkes 3 sind in geringem Abstand von der Bodenplatte perforierte Belüftungsrohre 4 mit Abstand zueinander angebracht. Durch diese Rohre 4 wird als ein quasi inertes Gas durch eine Leitung 5 Luft eingeblasen. Die durch das Haufwerk hindurchgeströmte, schadstoffbeladene Luft wird aus der Glocke 2 durch die Leitung 6 abgesaugt und einer Aktivkohle-Gas-Reinigungsanlage 7 zugeführt. Die Aktivkohle-Reinigungseinrichtung 7 besteht aus zwei mit Aktivkohle gefüllten Behältern, die so geschaltet sind, daß während der Adsorption der Schadgase an der Aktivkohle in dem einen Behälter der andere Behälter mit überhitztem Wasserdampf desorbiert wird. Das abgekühlte flüssige Gemisch aus Wasser und Schadstoff wird nach der Dichte getrennt und die wässrige Phase durch Stripen von gelösten Schadstoffen befreit. Die Gasphase wird wieder in den Kreislauf eingespeist und das dem Kreislauf entzogene von Schadstoffen befreite Wasser einem Vorfluter zugeleitet. Das von der Gasabführleitung 6 abgezogene Gas, das mit den Schadstoffen belastet ist, passiert zweckmäßigerweise einen Kompressor 8 (Seitenkanalverdichter) und einen Kühler 25, bevor es in die Gasreinigungsanlage 7 gelangt. Durch zu hohe Temperaturen wird die Adsorptionswirkung der Aktivkohle negativ beeinträchtigt. Nach Passieren der Gasreinigungsanlage 7 wird das Reingas wieder in einem Kompressor 8 komprimiert und gegebenenfalls über einen Wärmetauscher 24 wieder dem kontaminierten Erdboden über die Leitung 5 zugeführt.

Außer der beschriebenen Gasreinigungsanlage 7 mit zwei selbstdesorbierenden parallel-geschalteten Aktivkohlebehältern ist eine Anlage mit einem Aktivkohlebehälter als Einweganlage möglich. Im Falle von schlecht adsorbierenden Substanzen, wie z. B. Vinylchlorid, müssen zur Verhinderung konkurrierender Adsorptionen eventuell zwei Anlagen hintereinander geschaltet werden.

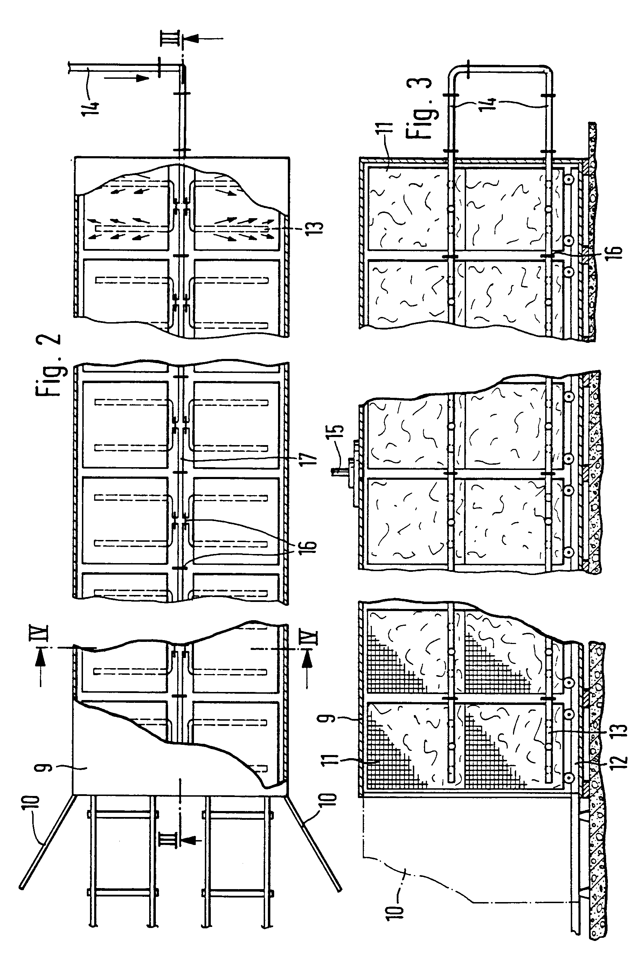

Eine nach dem vorstehend geschilderten an sich bekannten Prinzip arbeitende erfindungsgemäß ausgebildete Reinigungs-Einrichtung zeigen die Fig. 2-4. Hier ist der geschlossene Raum ein transportabler kastenförmiger Stahl-Container 9. Ein solcher Container kann beispielsweise die genormten Abmessungen 12,2 m x 2,4 m x 2,6 m besitzen. Zu öffnen ist dieser Container an einer seiner schmalen Stirnseiten über gasdicht verschließbare Türen 10. Als poröse Behälter für die Aufnahme des zu reinigenden Materials dienen handelsübliche Gitterboxen 11, die in dem vorliegenden speziellen Beispiel die Größe 1 m x 1 m x 1,2 m haben können. Diese Gitterboxen 11 können jeweils zu zweit übereinander gestapelt auf in dem Container 9 nebeneinander verlegten zwei Schienenpaaren 12 in den Container eingebracht werden. Jede der Gitterboxen 11 ist mit im Abstand zu dem geschlossenen Boden der Box verlegten perforierten Belüftungsrohren 13 durchzogen. Die Perforation kann über den Umfang des einzelnen Rohres 13 ungleichmäßig verteilt sein, wobei der größte Perforationsanteil in der Regel geodätisch nach oben weist. Der Container 9 ist mit Luftzu- und Abführleitungen 14 bzw. 15 versehen. Die über die Leitung 15 abgesaugte Schadstoffe enthaltende Luft wird in einer hier nicht nochmals dargestellten Aktivkohle-Reinigungseinrichtung gereinigt und im Kreislauf über die Leitung 14 dem Container 9 erneut zugeführt. Die Aktivkohle-Reinigungseinrichtung kann insbesondere eine solche sein, wie sie bei dem ersten Ausführungsbeispiel im einzelnen beschrieben ist.

Die Beschickung der Gitterboxen 11 mit kontaminiertem Material, die Luftbeaufschlagung der Gitterboxen und deren Einbringen in den Container 9 geschieht wie folgt.

Die einzelnen bereits mit Material befüllten oder noch vor der Containeröffnung zu befüllenden Gitterboxen 11 werden auf temporär vor die Container-Öffnung verlegte Schienen gesetzt.Die aus den Gitterboxen 11 herausragenden freien offenen Enden der Belüftungsrohre 13 werden über Schnellverschlüsse 16 mit Hilfe einzelner Rohrpaßstücken 17 untereinander verbunden. Das Einschieben der Gitterboxen 11 in den Container 9 kann paarweise bei jeweils übereinander gestapelten Boxen erfolgen oder es können auch sämtliche Boxen außerhalb des Containers miteinander verbunden und sodann gemeinsam in den Container 9 eingeschoben werden. Die Anschlüsse der Rohrpaßstücke an die Luftzu- und Abfuhrleitungen 14 und 15 können von außen hergestellt werden. Der Container der oben beschriebenen Größe nimmt in der angegebenen Anordnung vierundvierzig der oben maßlich ebenfalls angegebenen Gitterboxen 11 auf. Die Behandlung des Materials in dem Container 9 ertreckt sich in der Regel über Zeiträume zwischen Tagen und einigen Wochen. Abgesehen von der Art der jeweils vorliegenden Kontamination hängt die Behandlungsdauer auch wesentlich von dem durch den Container hindurchgeschickten Mengenstrom an Luft sowie deren Temperatur ab. Bei dem vorliegenden Beispiel eines Füllvolumens der Gitterboxen 11 von 1,2 Kubikmeter und einer Befüllung durch einen zu einem spezifischen Gewicht von 1,3 t/Kubikmeter aufbereiteten Material wird der Luftmengenstrom so festgelegt, daß 1 Kubikmeter Material pro Stunde von etwa 20 Kubikmeter Luft durchströmt wird. Die Temperatur der Luft wird bei Eintritt in den Container 9 mit ca. 50 Grad Celsius oder mehr eingestellt, wobei auch Temperaturen oberhalb 100 Grad Celcius möglich und vorteilhaft sein können. Um von dem Material stammende Partikelaustragungen in die Aktivkohlefilter zu vermeiden, empfiehlt es sich, die Gitterboxen 11 durch vliesförmige Filtermaterialien abzudecken.

Ein besonderer Vorteil der Ausbildung des erforderlichen geschlossenen Raumes als Stahl-Container besteht darin, daß ein solcher Container ohne weiteres an den jeweiligen Ort einer Verunreinigung transportiert und dort zur Durchführung der Reinigung eingesetzt werden kann. Es können selbstverständlich auch mehrere Container gleichzeitig an einem Behandlungsort eingesetzt werden. Zu diesem Zweck sind sämtliche Anlagenteile einschließlich der Gasreinigungseinrichtung modulartig vernetzbar ausgestaltet. Gegenüber der in situ Reinigung des Bodens kann man bei dem erfindungsgemäßen Verfahren die bei unterschiedlichen Materialien jeweils unterschiedlichen und vielfach im einzelnen zudem noch unbekannten Randbedingungen durch beispielsweise Auflockern und Anwärmen des Materials bei der Belüftung weitgehend optimieren.

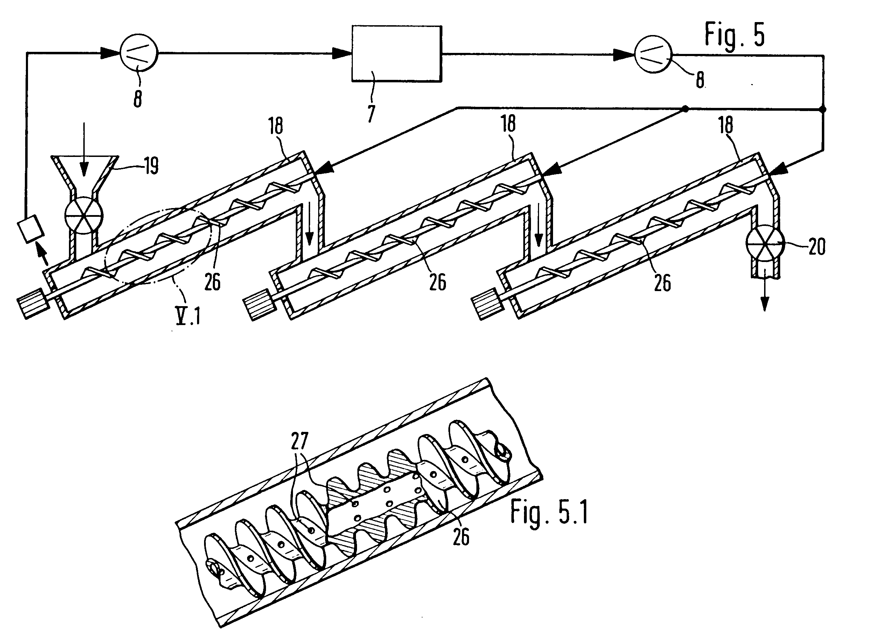

Eine weitere Einrichtung zur Durchführung des erfindungsgemäßen Verfahrens sind die in Fig.5 und 5.1 gezeigten Schneckenförderer 18. Das Behandlungsgas wird durch diese wiederum im Kreislauf geführt, wobei ein Gegen- oder Gleichstrom zur Förderrichtung des aufzübereitenden Materials möglich ist. Das Besondere bei dieser Ausführungsform ist, daß die Schnecken 26 hohl ausgebildet sind und eine an das aufzübereitende Material angrenzende poröse mit dem Hohlraum verbundene Oberfläche aufweisen. Die Porosität kann dabei von einer Vielzahl einzelner Öffnungen 27 erzeugt sein. Von den Schneckenförderern 18 sind zweckmäßigerweise mehrere hintereinander geschaltet, um auf diese Weise möglichst ein Reinigungsverfahren mit kontinuierlich durchzusetzendem Material zu erhalten und dadurch mit extrem kurzen Behandlungszeiten auskommen zu können. Das Material wird über einen Aufgabetrichter 19 in den ersten Schneckenförderer 18 eingegeben und über eine Zellenradschleuse 20 aus dem dritten und damit bei dem gezeigten Beispiel letzten Schneckenförderer abgezogen. Die kurzen Behandlungszeiten werden hier durch die hervorragende Vermischung von direkt aus den Schnecken 26 austretendem Behandlungsgas mit dem durch die Schneckengänge geförderten Material erreicht. Diese verfahrenstechnische und apparativ günstige Vorgehensweise wird kombiniert mit einer besonderen Aufheizung der Desorptionsluft auf etwa 40 bis 220 Grad Celsius. Über einen entsprechenden Trocknungsvorgang des belasteten Materials wird eine sehr effektive und rasch arbeitende thermische Desorption eingeleitet, die eine besonders wirkungsvolle Abreinigung in stark bindigen Böden gewährleistet. Die heiße schadstoffbeladene Luft muß bei dieser Reinigungsvariante über einen Abscheider auf ca. 30 Grad Celcius abgekühlt werden, um eine ausreichende Absorption der verbleibenden gasförmigen Schadstoffe in der nachgeschalteten Aktivkohleanlage zu gewährleisten. Diese Verfahrensvariante kann kontinuierlich betrieben werden.

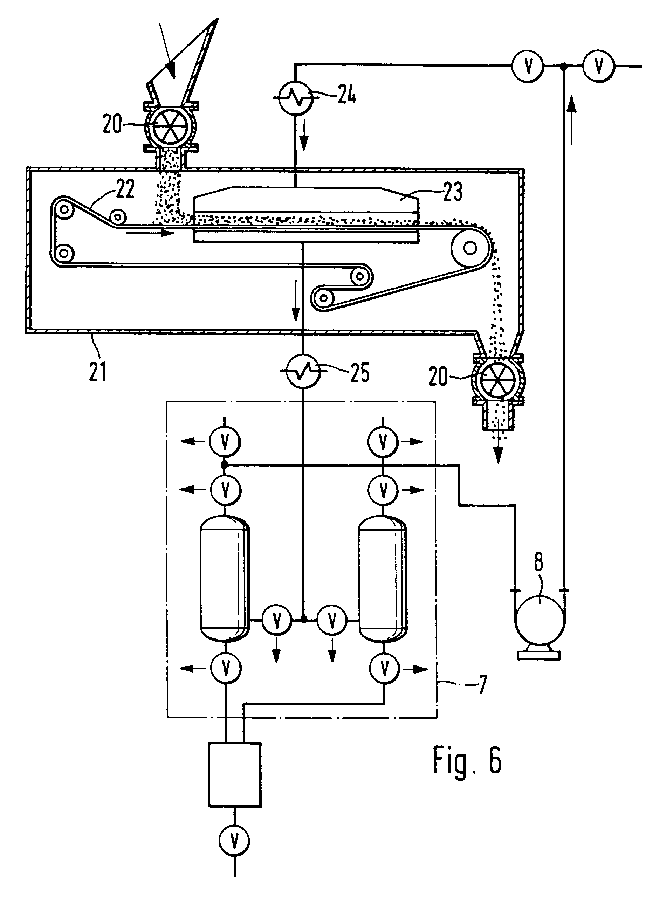

Eine weitere kontinuierlich betreibbare Einrichtung zeigt Fig.6. Dort wird das zu behandelnde Material auf ein in einem geschlossenen Behälter 21 befindliches Endlos-Filterband 22 aufgegeben. Das Filterband 22 ist porös. Auf dem Filterband 22 wird das zu behandelnde Material durch den Behälter 21 transportiert und aus dem Behälter dekontaminiert abgezogen. Das zur Behandlung erforderliche inerte Gas wird wiederum im Kreislauf geführt, wobei die Regeneration des Gases in der bereits weiter oben beschriebenen Reinigungsanlage 7 erfolgt. Auf dem Weg von der Aufgabe auf das Filterband 22 wird das aufzübereitende Material von dem im Kreislauf geführten inerten Gas zur Aufnahme der Kontaminate durch das porös ausgebildete Filterband hindurch durchströmt. Um diese gezielte Durchströmung im Bereich des Filterbandes 22 zu erreichen, durchläuft das Filterband zusammen mit dem aufzübereitenden Material eine geschlossene von dem inerten Gas beaufschlagte Absaugevorrichtung 23. Vor dem Eintritt in die Absaugevorrichtung 23 wird das inerte Gas in einer Heizeinrichtung 24 erwärmt, während es vor Eintritt in die Aktivkohle-Reinigungsanlage 7 in einem Wärmetauscher 25 auf eine für die Aktivkohlefilteranlage zuträgliche Temperatur abgekühlt wird. Mit einer solchen Bandfilter-Anlage kann das erfindungsgemäße Verfahren wiederum kontinuierlich ausgeführt werden. Das Filterband 22 kann bezüglich seiner Umlaufgeschwindigkeit der Art und dem Grad der Kontamination des jeweils aufzubereitenden Materials angepaßt werden. Um die Porosität des Filterbandes 22 kontinuierlich aufrecht zu erhalten, kann das Band außerhalb der Absaugevorrichtung 23 eine Reinigungsanlage durchlaufen, in der es beispielsweise mit Wasser bespült oder mit Druckluft durchblasen wird.

Stoffe, die mit den erfindungsgemäßen Einrichtungen eliminiert werden können, können beispielsweise sein: aliphatische und aromatische Kohlenwasserstoffe, halogenierte Kohlenwasserstoffe, insbesondere Chlorkohlenwasserstoffe, Fluorchlorkohlenwasserstoffe sowie leicht siedende Lösemittel, wie Tetrahydrofuran, Cyclohexanan usw. und Chlorbenzole, Alkohole, Phenole und Chlorphenole, etc. Insgesamt kommen jedoch alle niedrigsiedenden und/oder wasserdampfflüchtigen Verbindungen als entfernbar in Frage.

Das in den erfindungsgemäßen Einrichtungen durchführbare Verfahren beruht im Grunde auf dem Prinzip, die entfernbaren flüchtigen Substanzen durch gezielte Begasung einerseits und Absaugung andererseits in einem geschlossenen Raum zu desorbieren oder thermisch zu desorbieren und die desorbierten Substanzen danach an einem Adsorber wie Aktivkohle zu adsorbieren und das Gas dabei zur Vermeidung einer Verunreinigung der Atmosphäre möglichst beständig im Kreis zu führen.

## Patentansprüche

1. Einrichtung zur Entfernung flüchtiger Stoffe, insbesondere niedrigsiedender und/oder wasserdampfflüchtiger organischer Verbindungen aus Erdböden und vergleichbaren Materialien, insbesondere solcher mit bindigem Charakter, durch Bespülen in einem geschlossenen Raum (9,18,20) mit anschließend abzusaugendem, von den aufgenommenen Kontaminaten zu reinigendem und sodann zur erneuten Bespülung im Kreislauf bis zur Erzielung des gewünschten Reinheitsgrades des Bodenmaterials rückzuführendem quasi inertem Gas, das erwärmt sein kann,
**gekennzeichnet durch die Merkmale**
a. in den geschlossenen Raum (9) ist eine Vielzahl poröser mit kontaminiertem Bodenmaterial befüllbarer Behälter (11) mit Abstand zueinander herausnehmbar einsetzbar,
b. die Behälter (11) sind in ihrem freien Inneren jeweils mit Gaszuführungsmitteln (13) versehen, die an eine in den geschlossenen Raum einmündende Gaszuleitung (14) anschließbar sind,
c. die Lage der in den Behältern (11) vorgesehenen Gaszuführungsmittel (13) erlaubt ein die Gaszufuhröffnungen abdeckendes Einbringen des Bodenmaterials in diese Behälter (11),
d. der geschlossene Raum ist mit einer Absaugeeinrichtung (6) versehen,
e. die Absaugeeinrichtung (6) führt das abgesaugte Gas über eine Gasreinigungsanlage (7) gereinigt zurück in die den geschlossenen Raum mit Gas versorgende Gaszuleitung (14).

2. Einrichtung nach Anspruch 1,
**dadurch gekennzeichnet,**
daß der geschlossene Raum ein verschließbarer transportabler Container (9) ist oder eine Kombination solcher Container.

3. Einrichtung nach Anspruch 1 oder 2,
**dadurch gekennzeichnet,**
daß die Gaszuführmittel der einzelnen Behälter (11) poröse Rohre (13) sind.

4. Einrichtung nach einem der vorhergehenden Ansprüche,
**dadurch gekennzeichnet,**
daß die Gaszuführmittel (13) der einzelnen Behälter (11) über Schnellverschlüsse (16) untereinander ver- und an die Gaszuleitung (14) anbindbar sind.

5. Einrichtung nach einem der vorhergehenden Ansprüche,
**dadurch gekennzeichnet,**
daß die porösen Behälter übliche Gitterboxen (11) sind.

6. Einrichtung nach einem der vorhergehenden Ansprüche,
**dadurch gekennzeichnet,**
daß das in die porösen Behälter (11) eingefüllte aufzubereitende Bodenmaterial in sämtlichen Bereichen, in denen es nicht an undurchlässige Behälterwandteile direkt angrenzt, mit Filtermaterial abgedeckt ist.

7. Einrichtung nach einem der Ansprüche 2-6,
**dadurch gekennzeichnet,**
daß der Container (9) eine zu öffnende Seitenwand besitzt und auf seinem Boden mit senkrecht zu der zu öffnenden Seitenwand verlaufenden Schienen (12) oder Rollenförderern versehen ist, auf denen die porösen Behälter (9) über ggf. Räder in den Container (9) einschiebbar sind.

8. Einrichtung nach Anspruch 7,
**dadurch gekennzeichnet,**
daß der Container (9) mit zwei parallelen Schienenpaaren (12) oder Rollenförderern zur Aufnahme zweier benachbarter Behälterreihen ausgerüstet ist.

9. Einrichtung nach Anspruch 8,
**dadurch gekennzeichnet,**
daß die Gaszuführmittel (13) der einzelnen Behälter (9) über zwischen den beiden Behälterreihen verlaufende durch Schnellverschlüsse (16) miteinander koppelbare Leitungspaßstücke (17) miteinander verbunden sind.

10. Einrichtung nach Anspruch 9,
**dadurch gekennzeichnet,**
daß der Container (9) an der der zu öffnenden Seitenwand gegenüberliegenden Wand einen durch Einfahren in Schienenrichtung selbstschließenden Leitungsverschluß für das koppelbare Leitungsstück (17) des angrenzenden Behälters (9) an die Gaszuleitung (14) aufweist.

11. Einrichtung nach einem der Ansprüche 2-10,
**dadurch gekennzeichnet,**
daß mindestens jeweils zwei Behälter (11) übereinander gestapelt in den Container (9) einbringbar sind.

12. Einrichtung nach dem Oberbegriff des Anspruchs 1,
**dadurch gekennzeichnet,**
daß der geschlossene Raum ein Schneckenförderer (18) mit einer hohlen oberflächlich zumindest teilweise porösen Schnecke ist, in dem dem an einem Ende zugeführten aufzubereitenden Bodenmaterial durch die Schnecke hindurch von dem anderen Ende her im Kreislauf durch eine Gasreinigungsanlage (7) geführtes Gas zugeführt wird.

13. Einrichtung nach Anspruch 12,
**dadurch gekennzeichnet,**
daß mehrere Schneckenförderer (18) hintereinander geschaltet durchströmbar sind.

14. Einrichtung nach dem Oberbegriff des Anspruchs 1,
**dadurch gekennzeichnet,**
daß der geschlossene Raum ein Bandfilter (Behälter 21 mit Filterband 22) ist, in dem das aufzubereitende Bodenmaterial auf einem umlaufenden porösen Endlos-Filterband vorzugsweise in einer Absaugevorrichtung (23) durchströmt wird.

15. Einrichtung nach einem der vorhergehenden Ansprüche,
**dadurch gekennzeichnet,**
daß die an die Atmosphäre angrenzenden Teile der Einrichtung wärmeisoliert sind.

## Claims

1. Device for the removal of volatile substances, in particular low-boiling and/or steam-volatile organic compounds of soils and comparable materials, in particular those of tenacious character, by rinsing in a closed space (9, 18, 20) with a quasi inert gas, which has next to be extracted, cleansed of the received contaminates and then recycled within the circuit, for renewed rinsing, until the desired level of purity of the soil material is obtained, the said gas being able to be heated, characterized by the features:
a. into the closed space (9) there can be removably inserted, at a distance apart, a plurality of porous receptacles (11) which can be filled with contaminated soil material,
b. the receptacles (11) are respectively provided, in their free interior, with gas-feed means (13), which can be connected to a gas supply line (14) opening out into the closed space,
c. the position of the gas-feed means (13) provided in the receptacles (11) allows the soil material to be introduced into these receptacles (11) such that it covers the gas feed openings,
d. the closed space is provided with an extraction device (6),
e. the extraction device (6) guides the extracted gas, cleansed by means of a gas-purification plant (7), back into the gas supply line (14) supplying gas to the closed space.

2. Device according to Claim 1, characterized in that the closed space is a sealable, transportable container (9) or a combination of such containers.

3. Device according to Claim 1 or 2, characterized in that the gas-feed means of the individual receptacles (11) are porous pipes (13).

4. Device according to one of the preceding claims, characterized in that the gas-feed means (13) of the individual receptacles (11) can be interconnected by rapid-action fastenings (16) and can be linked to the gas supply line (14).

5. Device according to one of the preceding claims, characterized in that the porous receptacles are conventional skeleton containers (11).

6. Device according to one of the preceding claims, characterized in that the soil material to be treated, which is filled into the porous receptacles (11), is covered with filter material in all regions in which it does not directly border upon impermeable wall parts of a receptacle.

7. Device according to one of Claims 2-6, characterized in that the container (9) possesses an opening side wall and is provided on its base with rails (12) or roller conveyors, running perpendicular to the opening side wall, on which the porous receptacles (9) can be slid, where appropriate by means of wheels, into the container (9).

8. Device according to Claim 7, characterized in that the container (9) is equipped with two parallel rail pairs (12) or roller conveyors for receiving two adjacent rows of receptacles.

9. Device according to Claim 8, characterized in that the gas-feed means (13) of the individual receptacles (9) are connected to one another by line adapters (17) which run between the two rows of receptacles and can be coupled together by rapid-action fastenings (16).

10. Device according to Claim 9, characterized in that the container (9) exhibits, on the wall lying opposite the opening side wall, a line fastening for attaching the couplable line piece (17) of the bordering receptacle (9) to the gas supply line (14), which line fastening self-locks by retracting in the direction of the rail.

11. Device according to one of Claims 2-10, characterized in that at least two receptacles (11) respectively can be introduced into the container (9), stacked one on top of the other.

12. Device according to the preamble of Claim 1, characterized in that the closed space is a worm conveyor (18) having a hollow, superficially at least partially porous worm, in which worm conveyor the soil material to be treated, which is fed in at one end, is supplied with gas which is guided through the worm from the other end within the circuit through a gas-purification plant (7).

13. Device according to Claim 12, characterized in that a plurality of worm conveyors (18), connected one behind the other, can be flowed through.

14. Device according to the preamble of Claim 1, characterized in that the closed space is a band filter (receptacle 21 with filter band 22), in which the soil material to be treated is flowed through on a circumferential, porous continuous filter band, preferably in an extraction apparatus (23).

15. Device according to one of the preceding claims, characterized in that those parts of the device which border upon the atmosphere are heat-insulated.

## Revendications

1. Dispositif d'élimination de substances volatiles, en particulier de composées organiques à bas point d'ébullition et/ou entraînables à la vapeur, hors de terres et d'autres matières comparables, en particulier celles qui présentent un caractère cohérent, par rinçage dans un espace fermé (9,18,20) rempli de gaz quasi inerte pouvant être réchauffé et qui doit être ensuite aspiré, épuré des substances contaminées absorbées et recyclé en circuit pour servir à une nouvelle épuration jusqu'à obtention du degré de pureté souhaité des terres,
**caractérisé par les propriétés suivantes**
a. l'espace fermé (9) peut recevoir un grand nombre de réservoirs (11) poreux, pouvant être remplis de terre contaminée, disposés à distance l'un de l'autre et amovibles,
b. l'intérieur libre des réservoirs (11) comporte des dispositifs de répartition du gaz (13) pouvant être raccordés à une conduite d'alimentation de gaz (14) débouchant dans l'espace fermé,
c. la position des dispositifs de répartition du gaz (13) prévus dans les réservoirs (11) permet d'introduire la terre en recouvrant les ouvertures d'alimentation du gaz,
d. l'espace fermé est équipé d'un dispositifd'aspiration (6),
e. le dispositif d'aspiration (6) recycle le gaz aspiré, via une installation d'épuration de gaz (7), dans la conduite d'alimentation de gaz (14) qui alimente en gaz l'espace fermé,

2. Dispositif selon la revendication 1,
**caractérisé par le fait**
que l'espace fermé est un conteneur (9) transportable et verrouillable ou une combinaison de tels conteneurs.

3. Dispositif selon l'une des revendications 1 ou 2,
**caractérisé par le fait**
que les dispositifs de répartition du gaz des différents réservoirs (11) sont des tubes poreux (13).

4. Dispositif selon l'une des revendications précédentes,
**caractérisé par le fait**
que les dispositifs de répartition du gaz (13) des différents réservoirs (11) peuvent être assemblés entre eux et raccordés à la conduite d'alimentation du gaz (14) par des raccords rapides (16).

5. Dispositif selon l'une des revendications précédentes,
**caractérisé par le fait**
que les réservoirs poreux sont des caisses à claire-voie usuelles (11).

6. Dispositif selon l'une des revendications précédentes,
**caractérisé par le fait**
que la terre à traiter, introduite dans les réservoirs poreux (11) est recouverte de matériau filtrant dans toutes les zones où elle n'est pas en contact avec les éléments de parois imperméables.

7. Dispositif selon l'une des revendications 2 - 6,
**caractérisé par le fait**
que le conteneur (9) possède une paroi latérale à ouvrir et qu'il est équipé sur son fond de rails (12) ou de convoyeurs à rouleaux perpendiculaires à la paroi latérale à ouvrir, sur lesquels les réservoirs poreux (9) munis éventuellement de roues peuvent être engagés dans le conteneur (9).

8. Dispositif selon la revendication 7,
**caractérisé par le fait**
que le conteneur (9) est équipé de deux paires de rails ou de convoyeurs à rouleaux parallèles (12) destinés à recevoir deux rangées de réservoirs voisines.

9. Dispositif selon la revendication 8,
**caractérisé par le fait**
que les dispositifs de répartition du gaz (13) des différents réservoirs (9) sont connectés par des raccords de tuyauterie (17) pouvant être assemblés entre eux par des raccords rapides (16) et disposés entre les deux rangées de réservoirs.

10. Dispositif selon la revendication 9,
**caractérisé par le fait**
que le conteneur (9) présente, sur la paroi opposée à la paroi latérale à ouvrir, un clapet fermé automatiquement par l'introduction dans le sens des rails, pour l'élément de conduite (17) de raccordement du réservoir (9) voisin de la conduite d'alimentation du gaz.

11. Dispositif selon l'une des revendications 2 - 10,
**caractérisé par le fait**
que deux réservoirs (11) au moins, gerbés l'un sur l'autre, peuvent être introduits dans le conteneur (9).

12. Dispositif selon le préambule de la revendication 1,
**caractérisé par le fait**
que l'espace fermé est un convoyeur à vis (18) avec une vis creuse, au moins partiellement poreuse en surface, à l'intérieur duquel est injecté, dans la terre introduite à une extrémité, du gaz introduit par l'autre extrémité et circulant en circuit via une installation de purification de gaz (7).

13. Dispositif selon la revendication 12,
**caractérisé par le fait**
que plusieurs convoyeurs à vis (18) assemblés consécutivement peuvent être traversés par le gaz.

14. Dispositif selon le préambule de la revendication 1,
**caractérisé par le fait**
que l'espace fermé est un filtre à bande (réservoir 21 avec filtre à bande 22) dans lequel la terre à traiter est traversée par le gaz sur une bande filtrante poreuse en circulation, de préférence à l'intérieur d'un dispositif d'aspiration (23).

15. Dispositif selon l'une des revendications précédentes,
**caractérisé par le fait**
que les éléments du dispositif en contact avec l'atmosphère sont munis d'une isolation thermique.
